# EUROPEAN PATENT APPLICATION

(11) **EP 4 748 611 A1**
(43) Date of publication of application: **27.05.2026**
(21) Application number: 25211171.1
(22) Date of filing: 24.10.2025
(51) Int. Cl.: B60K 35/81

(54) **IN-VEHICLE SYSTEM, VEHICLE, AND INFORMATION PROCESSING APPARATUS**

(30) Priority: 26.11.2024 JP 2024205804
(71) Applicant: TOYOTA JIDOSHA KABUSHIKI KAISHA, Toyota-shi, Aichi-ken 471-8571 (JP)
(72) Inventor: TANAKA, Seiichi, Aichi-ken, 471-8571 (JP); FUJIWARA, Tatsuro, Aichi-ken, 471-8571 (JP); TSUJINO, Miki, Aichi-ken, 471-8571 (JP); ONISHI, Kanta, Aichi-ken, 471-8571 (JP); KOBATAKE, Yasuhiro, Aichi-ken, 471-8571 (JP); YOKOYAMA, Yuu, Aichi-ken, 471-8571 (JP)
(74) Representative: D Young & Co LLP

(57) **Abstract**

An in-vehicle system includes a display device (21, 22, 23), and an information processing apparatus (10) configured to output information via the display device (21, 22, 23). The display device (21, 22, 23) includes a pair of display units (22, 23) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25); and the information processing apparatus (10) includes a controller (101) configured to execute: obtaining touch operations performed on each of the pair of display units (22, 23); obtaining sensor data indicating a state of holding the steering wheel (4) by a driver; and performing, based on the sensor data, a disabling process of at least partially disabling the touch operations on at least one of the pair of display units (22, 23).

## Description

### BACKGROUND

### Technical Field

The present disclosure relates to a vehicle technology.

### Description of the Related Art

There are technologies that provide information to reduce the burden on drivers who drive automobiles. In this connection, for example, Patent Literature 1 discloses an in-vehicle system in which a display for providing information is disposed in the vicinity of a steering wheel.

### Citation List

### Patent Literature

Patent Literature 1: Japanese Patent No. 7306210
Patent Literature 2: Japanese Patent Application Laid-Open Publication No. 2017-215986
Patent Literature 3: Japanese Patent Application Laid-Open Publication No. 2017-114191

### SUMMARY

The object of the present disclosure is to prevent inappropriate operation of an in-vehicle display.

One aspect of the present disclosure is directed to an in-vehicle system including a display device, and an information processing apparatus configured to output information via the display device,
the display device including a pair of display units that are provided in a forward portion of a driver's seat in a passenger compartment, are disposed at positions on both sides of a steering wheel while protruding rearward of an instrument unit disposed in front of the steering wheel, and have touch panels,
the information processing apparatus including a controller configured to execute:
   obtaining touch operations performed on each of the pair of display units;
   obtaining sensor data indicating a state of holding the steering wheel by a driver; and
   performing, based on the sensor data, a disabling process to at least partially disable the touch operations on at least one of the pair of display units.

Another aspect of the present disclosure is directed to an information processing apparatus configured to provide information via a display device including a pair of display units that are provided in a forward portion of a driver's seat in a passenger compartment, are disposed at positions on both sides of a steering wheel while protruding rearward of an instrument unit disposed in front of the steering wheel, and have touch panels,
the information processing apparatus including a controller configured to execute:
obtaining touch operations performed on each of the pair of display units;
obtaining sensor data indicating a state of holding the steering wheel by a driver; and
performing, based on the sensor data, a disabling process to at least partially disable the touch operations on at least one of the pair of display units.

In addition, other aspects of the present disclosure are directed to a vehicle equipped with the above-described in-vehicle system, an information processing method to be executed by the above-described information processing apparatus, a program for causing a computer to execute the information processing method, and a computer readable storage medium storing the program in a non-transitory manner.

According to the present disclosure, it is possible to prevent inappropriate operations on an in-vehicle display.

### BRIEF DESCRIPTION OF THE DRAWINGS

FIG. 1 is a view illustrating a passenger compartment of a vehicle 1 according to an embodiment;
FIG. 2 is an enlarged view of a steering wheel 4 and its surroundings;
FIG. 3 is a diagram illustrating an example of components of the vehicle 1;
FIG. 4 is a diagram illustrating an example of components of a vehicle ECU 10;
FIG. 5 is a diagram illustrating a list of screens output to an outer display;
FIG. 6 is a diagram illustrating an example of screens output to the outer display;
FIG. 7 is a diagram illustrating an example of screens output to the outer display;
FIG. 8 is a diagram illustrating a list of screens output to an inner display;
FIG. 9 is a diagram illustrating an example of screens output to the inner display;
FIG. 10 is a diagram illustrating an example of screens output to the inner display;
FIG. 11 is a flowchart of processing to be executed by an HMI controller 1011;
FIG. 12 is a flowchart of processing to be executed by the HMI controller 1011;
FIG. 13 is a table in which the status of the vehicle and the contents of a disabling process are associated with each other;
FIG. 14 is a flowchart of processing to be executed by the HMI controller 1011; and
FIG. 15 is a view illustrating an example of a display device according to a modification.

### DESCRIPTION OF THE EMBODIMENTS

In recent years, as automobiles have become more sophisticated, the displays used to provide information are becoming larger, or the number of displays is increasing.

For example, a method has been proposed in which a large-sized touch panel display is disposed between a driver's seat and a front passenger seat in a front portion of a vehicle compartment, to collectively perform vehicle-related operations and information provision.

However, in such a method, the line of sight of the driver moves significantly when operating the components included in the vehicle or checking the output information. For the driving safety of the vehicle, it is preferable to minimize the movement of the driver's line of sight.

In general, a display device such as a liquid crystal display or the like is often disposed in the area in front of the driver's seat where an instrument panel is conventionally located. By outputting information to the display device, the movement of the driver's line of sight can be minimized.

However, the size of the display device disposed in front of the driver's seat is limited, and hence, it is not always possible to display all the pieces of information required by the driver. In addition, when these pieces of information are simultaneously output in the same area, for example, information necessary for driving the vehicle and auxiliary information such as entertainment will be mixed together, which will hinder intuitive information transmission.

In addition, there are also problems with the layout of the input interface for operation.

For example, a steering wheel is known that has cursor keys and push button switches to enable input operations while driving. However, in such an input interface, the layout of buttons and the like is fixed, making it difficult to adapt to a plurality of different targets. For example, in a case where the set temperature of an air conditioner can be raised or lowered, it can be changed by using two physical keys, but it is not possible to directly specify any point on a map by using the physical keys.

A form of operation by a touch panel could be considered, but as mentioned above, the touch panel display located in the front portion of the vehicle compartment is far from the steering wheel, so in addition to the movement of the driver's line of sight, the driver's hands also move significantly.

To solve these problems, an in-vehicle system has been devised in which a display device that allows input operations by touch is located in the vicinity of a steering wheel.

For example, by arranging displays with touch panels on the left and right sides of the steering wheel, the driver can operate the touch panels intuitively and quickly.

However, if the touch panel displays are disposed in the vicinity of the steering wheel, it is possible for the driver to perform touch operations while holding the steering wheel. For example, if the driver move his or her finger on the touch panels in this state, the driver's hand holding the steering wheel will also move, which could create a safety hazard.

The in-vehicle system according to the present disclosure solves such a problem.

An in-vehicle system according to one aspect of the present disclosure includes a display device and an information processing apparatus configured to output information via the display device, wherein the display device includes a pair of display units that are provided in a forward portion of a driver's seat in a passenger compartment, are disposed at positions on both sides of a steering wheel while protruding rearward of an instrument unit disposed in front of the steering wheel, and have touch panels; and the information processing apparatus includes a controller configured to execute: obtaining touch operations performed on each of the pair of display units; obtaining sensor data indicating a state of holding the steering wheel by a driver; and performing, based on the sensor data, a disabling process of at least partially disabling the touch operations on at least one of the pair of display units.

The display device includes the pair of display units disposed at positions on both sides of the steering wheel. Also, the pair of display units are each configured to allow touch operations using a touch panel.

The pair of display units are preferably disposed at positions protruding in the front and rear direction of the vehicle more toward the rear thereof than the instrument unit located in front of the steering wheel (typically, a meter panel where a speedometer is located), i.e., closer to the driver. By providing the pair of display units at such positions, it is possible to arrange the touch panels in the vicinity of the portions of the steering wheel held by the driver. In other words, it is possible to minimize the time that the driver has to release his/her hands from the steering wheel during operation.

However, if the touch panels are disposed in the vicinity of the driver's hands, the driver may able to perform touch operations while holding the steering wheel, which may impair safety.

To address this issue, the information processing apparatus according to the present disclosure obtains sensor data indicating the state of holding the steering wheel by the driver, and performs, based on the sensor data, the disabling process to at least partially disable touch operations on at least one of the pair of display units.

The sensor data may be obtained by any method as long as the holding state of the steering wheel can be sensed. For example, the sensor data may be data indicating an area where a hand is in contact with the surface of the steering wheel, or may be data indicating only whether or not a hand is in contact with the steering wheel.

In addition, the controller performs the disabling process based on the sensor data. The disabling process is a process of at least partially disabling touch operations performed on the pair of display units. The disabling process may be performed on either one of the pair of controllers or both of them.

For example, in a case where the sensor data indicates that the driver is holding the steering wheel with the left hand (or right hand), the controller may perform the disabling process on the display unit located on the left side (or right side) of the driver among the pair of display units. In this manner, the disabling process may be performed on one of the left and right display units.

In addition, the disabling process may be a process of totally disabling touch operations on the target display unit, or may be a process of disabling some touch operations on certain specific operation interfaces among a plurality of operation interfaces output to the target display unit.

According to such a configuration, it is possible to perform the disabling process on the display unit corresponding to the hand holding the steering wheel. In other words, it is no longer possible for the driver to perform touch operations while holding the steering wheel, thus making it possible to improve the driving safety of the vehicle.

Here, note that when the sensor data indicates that the steering wheel is not held, the controller may perform the disabling process on both of the pair of display units.

In order to perform touch operations on the display unit, it is necessary for the driver to release his or her hand(s) from the steering wheel, but when the driver completely releases his/her hands from the steering wheel, the safety of traveling is impaired. Therefore, when the steering wheel is in the hand-off state, the disabling process may be performed on both the display units. According to such a configuration, it is possible to avoid situations in which safety is impaired in order to perform touch operations.

In addition, the controller may not perform the disabling process on either of the pair of display units in a case where the traveling state of the vehicle meets a predetermined condition. For example, touch operations may be allowed in this manner in situations where it is unlikely to cause safety problems, such as when the speed of the vehicle is equal to or less than a predetermined value.

Also, in a case where the sensor data indicates that the steering wheel is being held by the driver's hand located closer to an outer side of the vehicle, the controller may perform the disabling process on the display unit located closer to the outer side of the vehicle among the pair of display units.

That is, the display unit disposed closer to an inner side of the vehicle may be excluded from the target of the disabling process. This is because the display unit disposed closer to the inner side of the vehicle may be operated by a passenger of the vehicle.

Moreover, the controller may obtain a rotational torque applied to the steering wheel, and may perform the disabling process when the rotational torque is equal to or greater than a predetermined value.

Also, the disabling process based on the rotational torque may be a process of disabling touch operations on either one of the pair of display units, or a process of disabling a part of a plurality of output operation interfaces.

This is because when a rotational torque is being applied to the steering wheel, i.e., when the driver is performing a steering operation, it may be better to disable touch operations for safety reasons.

On the other hand, it may be preferable to be able to operate important functions even during the steering operation. Therefore, instead of uniformly prohibiting touch operations, touch operations on either one of the display units may be prohibited, or touch operations on only a part of the plurality of operation interfaces may be prohibited.

Hereinafter, embodiments of the present disclosure will be described based on the accompanying drawings. The configurations of the following embodiments are examples, and the present disclosure is not limited to the configurations of the embodiments.

### (First Embodiment)

An overview of a vehicle system according to a first embodiment will be described. The vehicle system according to the present embodiment is configured to include a vehicle 1.

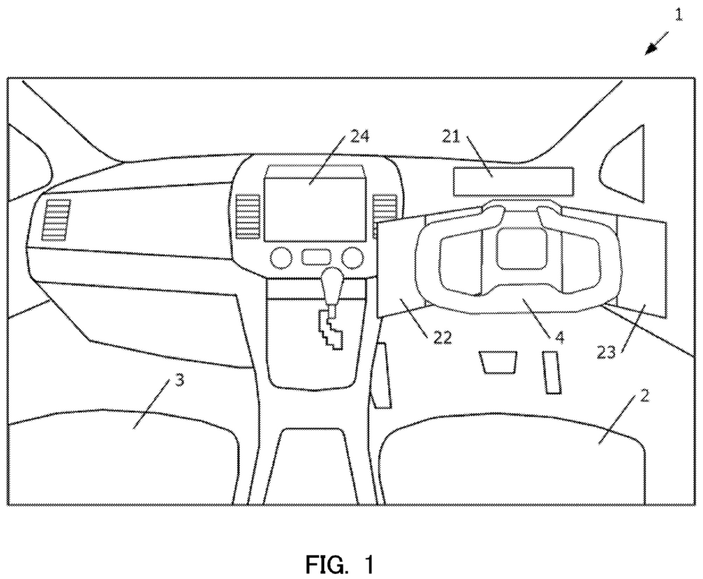

The vehicle 1 will be described with reference to FIG. 1.

FIG. 1 is a view illustrating the passenger compartment of the vehicle 1. As illustrated in FIG. 1, a driver's seat 2 and a front passenger seat 3 are provided in the passenger compartment of the vehicle 1. Note that the vehicle 1 of the present embodiment is a right-hand drive vehicle, and the driver's seat 2 is provided on the right side of the vehicle 1.

A steering wheel 4 is disposed on the forward side of the driver's seat 2. Note that the steering wheel 4 may be circular or may be U-shaped (a so-called irregular steering wheel), as illustrated.

The steering wheel 4 is connected to a steering device of the vehicle 1 via a steering column. The steering column is covered by a column cover.

The passenger seat 3 is provided on the left side of the driver's seat 2, and a center display 24 is disposed on the front side of the vehicle at an intermediate position between the driver's seat 2 and the passenger seat 3. The center display 24 displays, for example, auxiliary information such as car navigation, or contents related to entertainment such as audio and television.

A meter display 21 is provided on the vehicle front side of the steering wheel 4. The meter display 21 is a full-screen display that is positioned in front of the driver's seat 2 to provide various types of information to the driver of the vehicle 1. The meter display 21 displays information necessary for driving the vehicle such as, for example, a speed of the vehicle (vehicle speed), an engine speed (if the vehicle 1 has an engine), a charge and discharge condition (if the vehicle 1 has a drive battery), and a travel distance. The meter display 21 is an example of a "meter unit" in the present disclosure.

A pair of display devices are provided in a forward portion of the driver's seat 2 in the passenger compartment. The pair of display devices includes touch panel displays respectively disposed at positions on both sides of the steering wheel 4. In the present embodiment, the display disposed closer to the inner side of the vehicle is referred to as an inner display, and the display disposed closer to the outer side of the vehicle is referred to as an outer display. The inner display 22 and the outer display 23 are connected to an instrument panel of the vehicle 1. The outer display 23 is an example of a "first display unit" in the present disclosure, and the inner display 22 is an example of a "second display unit" in the present disclosure.

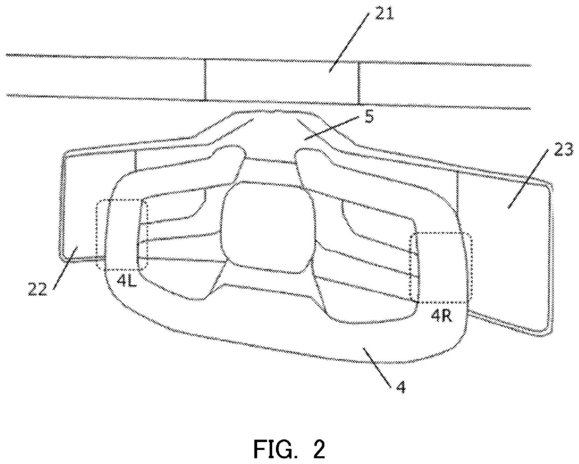

Referring to FIG. 2, the detailed structures of the inner display 22 and the outer display 23 will be described.

The inner display 22 and the outer display 23 are vertically long displays, and are connected to a support portion 5 which is a member supporting each display. The support portion 5 has a shape protruding in the left and right direction of the steering wheel 4. The outer display 23 is connected to the right end of the support portion 5 when facing the vehicle front side, and the inner display 22 is connected to the left end thereof when facing the vehicle front side. Accordingly, the display screens can be located in the vicinity of grip portions of the steering wheel 4.

Here, note that the above description is an example in the case where the vehicle 1 is a right-hand drive vehicle, and in the case where the vehicle 1 is a left-hand drive vehicle, the left and right sides are reversed. That is, the outer display 23 is connected to the left end of the support portion 5 when facing the front side of the vehicle, and the inner display 22 is connected to the right end portion of the support portion 5 when facing the front side of the vehicle.

The support portion 5 may also serve as a column cover that covers the steering column. The support portion 5 extends in the left and right direction (vehicle width direction) from its portion through which the steering column passes, and each of its left and right portions extends toward the vehicle rear side and is bent in its middle so that the angle thereof with respect to the left and right direction of the steering wheel becomes smaller.

Further, the inner display 22 and the outer display 23 are angled with respect to the left and right direction of the steering wheel 4, and are each disposed so as to be inclined toward the steering wheel side. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver.

An area 4R indicated by a broken line in FIG. 2 is a portion (grip portion) where the steering wheel 4 is gripped or held by the right hand, and an area 4L indicated by a broken line in FIG. 2 is a portion (grip portion) where the steering wheel 4 is gripped or held by the left hand. By forming the support portion 5 in the above-described shape, the positions of the inner display 22 and the outer display 23 in a vehicle front and rear direction can be brought closer to the grip portions of the steering wheel 4. Therefore, it is possible to further reduce the amount of hand movement when the driver performs a touch operation on the inner display 22 or the outer display 23 during driving.

### [System Configuration]

Next, the configuration of each device or component constituting the vehicle system of the vehicle 1 will be described.

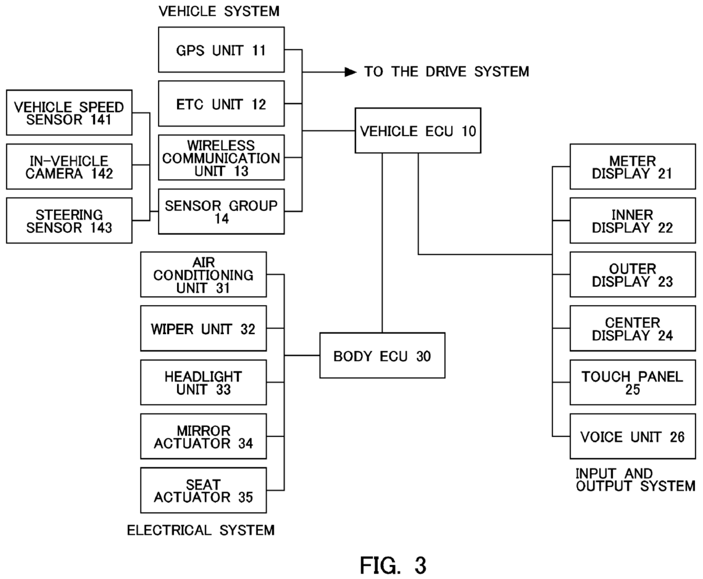

First, the components of the vehicle 1 will be described. FIG. 3 is a diagram schematically illustrating an example of the configuration of the vehicle 1. The vehicle 1 is configured to include the vehicle system, an electrical system, and an input and output system.

The vehicle system is a system that controls the motion of the vehicle 1. The vehicle system includes a plurality of components related to the travel of the vehicle 1.

The input and output system is a system that provides information to the occupant (driver) of the vehicle 1 and obtains an input from the occupant. The input and output system includes a plurality of components for inputting and outputting information.

The electrical system is a system that controls electrical equipment included in the body of the vehicle. It includes a plurality of components related to the electrical equipment included in the body of the vehicle.

The components included in each system may include a plurality of electrical equipment and an ECU that controls the electrical equipment.

A vehicle ECU 10 and a body ECU 30 may be configured as a computer including a processor (a CPU, a GPU, or the like), a main storage device (a RAM, a ROM, or the like), and an auxiliary storage device (an EPROM, a hard disk drive, a removable medium, or the like). An operating system (OS), various programs, various tables, etc., are stored in the auxiliary storage device, and by executing the programs stored therein, it is possible to realize each function (software module) that meets a predetermined purpose, as will be described later. However, some or all of the functions may be realized as a hardware module by a hardware circuit such as, for example, an ASIC, an FPGA or the like.

The vehicle ECU 10 is connected to a plurality of components related to the travel of the vehicle.

A GPS unit 11 is a unit for obtaining position information of the vehicle 1. The GPS unit 11 includes a GPS antenna and a positioning module for measuring the position information. The GPS antenna is an antenna that receives positioning signals transmitted from positioning satellites (also referred to as GNSS satellites). The positioning module is a module that calculates the position information based on the signals received by the GPS antenna.

An ETC (Electronic Toll Collection System) unit 12 is a unit for collecting tolls on toll roads via wireless communication. The ETC unit 12 is configured to include an antenna and a communication module.

A wireless communication unit 13 includes an antenna and a communication module for performing wireless communication. The antenna is an antenna element for inputting and outputting radio or wireless signals. In the present embodiment, the antenna is suitable for mobile communication (e.g., mobile communication such as 3G, 4G, 5G, etc.). Note, that the antenna may be configured to include a plurality of physical antennas. The communication module is a module for performing mobile communication.

In addition, the wireless communication unit 13 may include a communication module other than the communication module for mobile communication. For example, the wireless communication unit 13 may include a communication module based on Bluetooth (registered trademark) communication. This makes it possible to establish a wireless connection with a user terminal in the vehicle, and to provide services in cooperation with the user terminal (e.g., hands-free calling).

The sensor group 14 is a set of a plurality of sensors for obtaining sensor data used in driving the vehicle. The sensors may obtain physical quantities or may obtain image data or the like. In the present embodiment, a sensor for detecting a vehicle speed (vehicle speed sensor 141), an image sensor for obtaining an image in front of the vehicle (in-vehicle camera 142) and a steering sensor 143 are exemplified as the sensors.

The steering sensor 143 is a sensor for obtaining a state of holding the steering wheel 4 by the driver. The steering sensor 143 may be, for example, a contact sensor disposed on the surface of the steering wheel. In this case, the steering sensor 143 can output data (e.g., bitmap data) for identifying an area where a hand is in contact with the surface of the steering wheel. Note that the steering sensor 143 may be any sensor as long as it can determine whether or not the driver is holding the steering wheel with his or her left hand or right hand. For example, by disposing a contact sensor in each of the grip portions (areas 4L and 4R) illustrated in FIG. 2, it is possible to determine which hand of the driver holds the steering wheel 4.

Here, note that the vehicle ECU 10 may be further connected to components belonging to a drive system (i.e., an engine, a motor, a battery, a transmission, and the like).

The body ECU 30 is connected to a plurality of electrical equipment included in the body of the vehicle 1.

In the present embodiment, examples of the electrical equipment provided on the body of the vehicle 1 include a car air conditioner, wipers, headlights, side mirrors, and an electric seat.

An air conditioning unit 31 is the car air conditioner of the vehicle 1. The air conditioning unit 31 includes, for example, a cooling unit, a heating unit, a compressor, a condenser, and the like. Also, the air conditioning unit 31 may include a controller for controlling these components.

A wiper unit 32 includes front wipers, rear wipers, motors for driving these wipers, and the like.

A headlight unit 33 includes headlights of the vehicle 1 and a unit for driving the headlights. The headlights are configured to be switchable between a high beam and a low beam, for example. If the headlights of the vehicle 1 are adaptive headlights, light illumination can also be controlled based on commands from the body ECU 30. The headlight unit 33 may further include tail lights, stop lamps, blinkers, and/or a unit for driving them.

A mirror actuator 34 includes a drive unit for driving side mirrors disposed on the left and right of the vehicle 1. The angles of the side mirrors can be adjusted upward, downward, leftward, and rightward by the mirror actuator 34.

A seat actuator 35 includes a drive unit for adjusting the position of a seat provided in the vehicle 1. By the seat actuator 35, the positions, heights, angles, etc., of a seat surface and a backrest can be adjusted.

Next, a device for inputting and outputting information will be described.

In the present embodiment, the vehicle 1 includes four displays for outputting information, i.e., the meter display 21, the inner display 22, the outer display 23, and the center display 24.

The meter display 21 is a display disposed in front of the driver, and outputs information related to the vehicle 1. On the meter display 21, information related to the state of the vehicle such as, for example, a vehicle speed, an engine speed, a remaining fuel amount, a remaining battery amount, a charge and discharge condition, and a travel distance is mainly output, but other information may also be output.

The inner display 22 and the outer display 23 are displays having touch panels disposed on both sides of the steering wheel. As described above, the inner display 22 is disposed on the center side of the vehicle, and the outer display 23 is disposed on the outer side of the vehicle.

In a case where the vehicle 1 is a right-hand drive vehicle, the inner display 22 is disposed on the left side in the traveling direction of the vehicle, and the outer display 23 is disposed on the right side in the traveling direction of the vehicle. However, in a case where the vehicle 1 is a left-hand drive vehicle, the inner display 22 is disposed on the right side in the traveling direction of the vehicle, and the outer display 23 is disposed on the left side in the traveling direction of the vehicle.

The center display 24 is a display disposed in the center of the vehicle. The center display 24 is disposed in a place where a display of a car navigation device was conventionally disposed. The center display 24 displays, for example, auxiliary information such as car navigation, or contents related to entertainment such as audio and television.

A touch panel 25 is a unit for detecting a touch operation performed on a corresponding display described above. In the present embodiment, the inner display 22, the outer display 23, and the center display 24 each have the touch panel 25, and can be operated by touch. The touch panel 25 detects a touch operation performed on the corresponding display, and transmits the detected contents to the vehicle ECU 10.

A voice unit 26 is a unit that inputs and outputs information by voice. The voice unit 26 may include, for example, a speaker and a microphone.

Next, a detailed configuration of the vehicle ECU 10 will be described.

The vehicle ECU 10 is connected to the vehicle system and the drive (powertrain) system, thereby controlling the vehicle 1. In addition, the vehicle ECU 10 has a function of inputting and outputting information by components included in the input and output system, and a function of controlling the electrical system via the body ECU 30 that controls the electrical system.

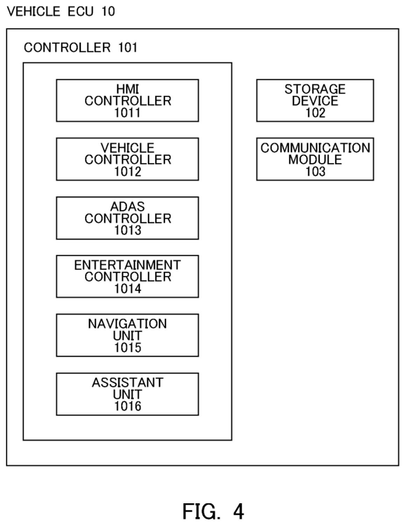

FIG. 4 is a diagram illustrating the detailed configuration of the vehicle ECU 10.

The vehicle ECU 10 is configured to include a control device 101, a storage device 102, and a communication module 103.

The control device 101 is an arithmetic unit that realizes various functions of the vehicle ECU 10 by executing a predetermined program. The control device 101 can be realized by a hardware processor such as, for example, a CPU or the like. Also, the control device 101 may be configured to include a RAM, a ROM (Read Only Memory), a cache memory, etc.

In the present embodiment, the control device 101 of the vehicle ECU 10 is configured to have six software modules: an HMI controller 1011, a vehicle controller 1012, an ADAS controller 1013, an entertainment controller 1014, a navigation unit 1015, and an assistant unit 1016. Each software module may be realized by executing a program stored in the storage device 102 to be described later by the control device 101 (CPU or the like). Information processing executed by the software modules is synonymous with information processing executed by the control device 101 (CPU or the like).

The HMI controller 1011 generates user interfaces for controlling various components included in the vehicle, and provides the user interfaces to the occupant of the vehicle via the input and output system. In addition, the HMI controller 1011 passes information input via the input and output system (e.g., commands for realizing the control specified by the user) to the corresponding software module or the like.

This allows any component in the vehicle to be controlled via the user interfaces.

Here, note that in the following description, commands generated by the user for controlling components of the vehicle 1 will be referred to as "user commands". For example, a command to change the temperature of the air conditioner, a command to change the drive mode, a command to make a phone call, a command to play music, etc., are examples of the "user commands".

Note that the components included in the vehicle may be electrical equipment such as headlights, wipers, etc. Also, the components of the vehicle may be an in-vehicle computer or software modules (e.g., autonomous driving software, navigation software, etc.) that are executed by the in-vehicle computer.

Note that the HMI controller 1011 selects the output destination of user interfaces from among the plurality of displays (the meter display 21, the inner display 22, the outer display 23, and the center display 24) depending on the type of the component to be controlled. A specific configuration thereof will be described later.

The vehicle controller 1012 controls the components included in the vehicle system or the components included in the drive system.

The vehicle controller 1012 may control a target component (e.g., a drive motor) based on a command (e.g., an acceleration command) received from another component (e.g., the ADAS controller 1013 to be described later), or may control a target component (e.g., the headlight unit) based on a user command (e.g., a command to turn on the headlights) obtained via the HMI controller 1011.

Further, the vehicle controller 1012 can communicate with the body ECU 30 to control the electrical equipment included in the body of the vehicle 1.

The ADAS controller 1013 controls advanced driver-assistance systems. For example, the ADAS controller 1013 generates a control command for the vehicle based on sensor information obtained from the in-vehicle sensors included in the sensor group 14, thereby realizing driving assistance such as cruise control, pre-crash safety, and lane keeping assist. The ADAS controller 1013 controls the vehicle system and the drive system by transmitting control commands to the vehicle controller 1012, for example.

The entertainment controller 1014 performs control related to the entertainment provided to the occupant of the vehicle. As functions related to the entertainment, for example, there can be exemplified an audio function, a television/radio function, and the like.

The navigation unit 1015 provides a car navigation function. The navigation unit 1015 can generate and provide route guidance for the vehicle based on the position information obtained from the GPS unit 11 and the traffic information obtained from the wireless communication unit 13. The navigation unit 1015 may, for example, accept the designation of vehicle destinations and transit points via the HMI controller 1011, and may also output information about the route generated.

The assistant unit 1016 provides information to the occupant of the vehicle by executing a language model that allow dialogue in natural language. The language model may be, for example, a large language model (LLM). For example, by executing an LLM having information about the occupant of the vehicle, it is possible to provide information in natural language. Note that in a case where there are a plurality of occupants of the vehicle, the assistant unit 1016 may obtain a language model corresponding to each person via a network and execute an optional language model.

The storage device 102 is a means or unit for storing information, and is composed of a storage medium such as a RAM, a magnetic disk, a flash memory or the like. The storage device 102 stores programs to be executed by the control device 101, data to be used by the programs, etc.

The communication module 103 is a communication interface for connecting the vehicle ECU 10 to a vehicle network. The communication module 103 is configured to be able to communicate with components of the vehicle 1 via a network such as a CAN (controller area network) or the like.

Here, note that the specific configuration of the vehicle ECU 10 may include omission, replacement, and addition of components as appropriate, depending on its implementation. For example, the control device 101 may include a plurality of hardware processors. The hardware processors may each be composed of a microprocessor, an FPGA, a GPU, or the like. In addition, input and output devices (e.g., an optical drive and the like) other than those illustrated may be added. Also, the vehicle ECU 10 may be composed of a plurality of computers. In this case, the hardware configurations of the respective computers may or may not match each other.

### [Interface Screen Provided by HMI Control Unit]

Next, the user interfaces provided by the HMI controller 1011 will be described.

The HMI controller 1011 can generate a plurality of types of graphical user interface (GUI) screens and output the screens via the plurality of displays described above.

In the present embodiment, the HMI controller 1011 consolidates and outputs the information related to the control of the vehicle to the outer display 23, and also consolidates and outputs the information related to the convenience and comfort of the occupant to the inner display 22. Accordingly, the occupant of the vehicle 1 can intuitively recognize which of the left and right sides the desired information is output to. Further, the operation surfaces of the touch panels included in the inner display 22 and the outer display 23 are disposed in the vicinity of the steering wheel. This can minimize the amount of eye and hand movement required by the driver of the vehicle.

The HMI controller 1011 can switch between a plurality of types of screens output to the outer display 23.

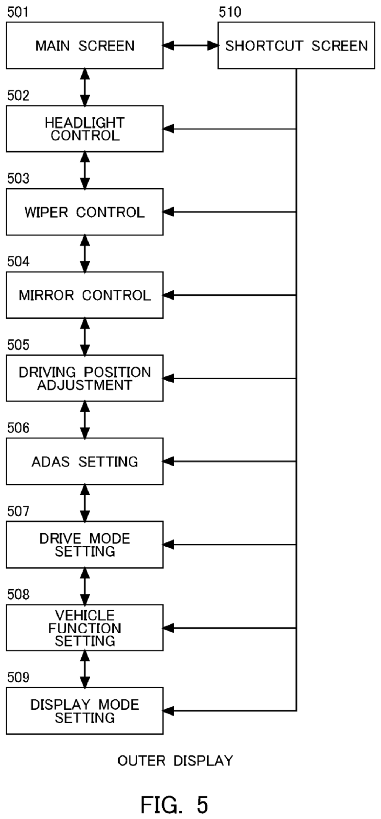

FIG. 5 is a diagram illustrating transitions between the plurality of types of screens output to the outer display 23. As illustrated in the figure, the HMI controller 1011 can output a plurality of screens, centered around a main screen 501, to the outer display 23.

### (1) Main Screen 501

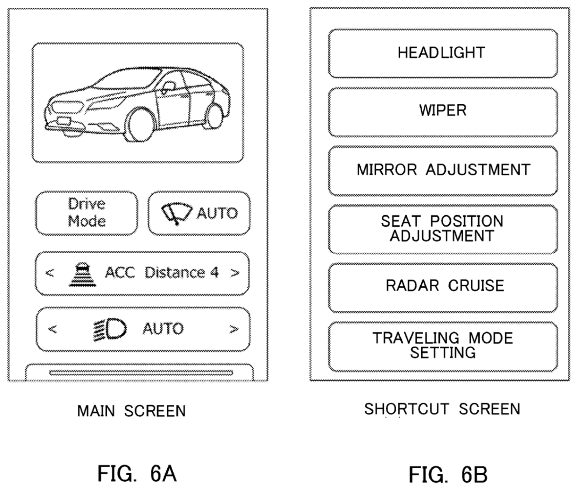

The main screen 501 is a screen that is normally displayed on the outer display during traveling. FIG. 6A is a diagram illustrating an example of the main screen 501. The display contents of the main screen can be customized by the user.

### (2) Headlight Control Screen 502

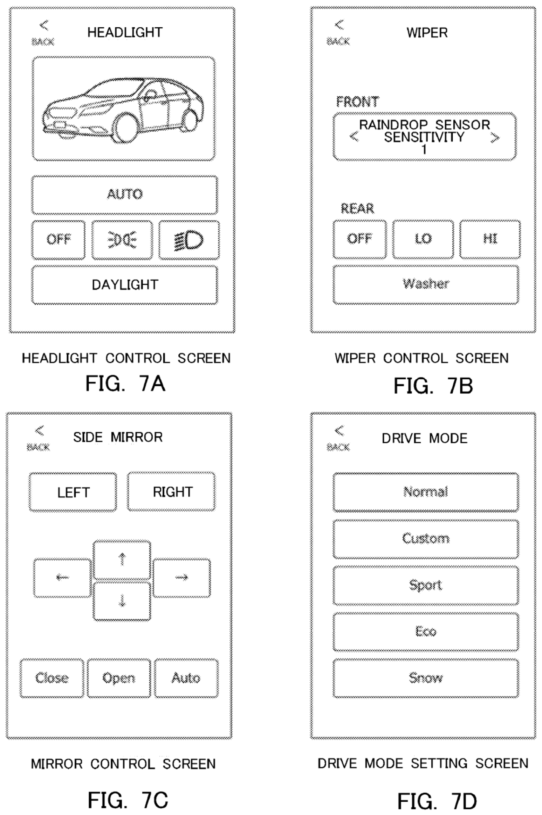

A headlight control screen 502 is a screen for setting the lighting state of the headlights included in the vehicle. FIG. 7A is a diagram illustrating an example of the headlight control screen 502.

The headlight control screen 502 allows the user to select the lighting state of the headlights (automatic, on, off, small light, daylight, etc.). The vehicle controller 1012 generates a user command based on the touch operation obtained via the HMI controller 1011, and transmits the user command to the body ECU 30 to control the headlight unit 33.

In addition, the vehicle controller 1012 may obtain data indicating the lighting state of the headlights from the body ECU 30 to reflect the lighting state on the screen via the HMI controller 1011. For example, the vehicle controller 1012 may reflect the current lighting state of the headlights on the graphic of the vehicle drawn on the screen.

### (3) Wiper Control Screen 503

A wiper control screen 503 is a screen for setting the operation state of the wipers (front and rear) of the vehicle 1. FIG. 7B is a diagram illustrating an example of the wiper control screen 503.

The wiper control screen 503 allows the user to select the operation state of the wipers (stop, automatic operation, intermittent operation, continuous operation, etc.). The vehicle controller 1012 generates a user command based on the touch operation obtained via the HMI controller 1011, and transmits the user command to the body ECU 30 to control the wiper unit 32.

In addition, the vehicle controller 1012 may obtain data indicating the operation state of the wipers from the body ECU 30 to reflect the operation state on the screen via the HMI controller 1011. For example, the vehicle controller 1012 may reflect the current operation state of the wipers on the graphic of the vehicle drawn on the screen.

### (4) Mirror Control Screen 504

A mirror control screen 504 is a screen for adjusting the deployment state and angle of the side mirrors included in the vehicle 1. FIG. 7C is a diagram illustrating an example of the mirror control screen 504.

The mirror control screen 504 allow the user to select the state (retracted/deployed state and angle) of each side mirror. The vehicle controller 1012 generates a user command based on the touch operation obtained via the HMI controller 1011, and transmits the user command to the body ECU 30 thereby to control the mirror actuator 34.

In addition, the vehicle controller 1012 may obtain data indicating the operation state of each side mirror from the body ECU 30 thereby to reflect the operation state on the screen via the HMI controller 1011. For example, the vehicle controller 1012 may reflect the current deployed/retracted state of each side mirror on the graphic of the vehicle drawn on the screen.

### (5) Driving Position Adjustment Screen 505

A driving position adjustment screen 505 is a screen for adjusting the position and angle of a seat (a seat surface and a backrest) included in the vehicle 1 and the position and angle of the steering wheel.

The driving position adjustment screen 505 allows the user to set the position and angle of the seat and the steering wheel. The vehicle controller 1012 obtains a touch operation via the HMI controller 1011, generates a user command based on the touch operation, and transmits the user command to the body ECU 30 to control the seat actuator 35 and the like.

### (6) ADAS Setting Screen 506

An ADAS setting screen 506 is a screen for notifying and setting the operation status of the advanced driver-assistance systems included in the vehicle.

For example, in a case where the advanced driver-assistance systems of the vehicle 1 include an autocruise function, the user of the vehicle 1 can set a cruising speed, an inter-vehicle distance, whether or not to follow a preceding vehicle, whether or not to trace a lane, etc., via the ADAS setting screen 506.

The information included in the ADAS setting screen 506 can be generated by the ADAS controller 1013.

### (7) Drive Mode Setting Screen 507

A drive mode setting screen 507 is a screen for setting the drive mode of the vehicle 1. FIG. 7D is a diagram illustrating an example of the drive mode setting screen 507.

For example, the user of the vehicle 1 can select a mode from a plurality of modes such as a normal mode, a sport mode, an eco mode, a snow mode, etc., via the drive mode setting screen 507. The vehicle controller 1012 changes the drive mode of the vehicle based on the selection.

### (8) Vehicle Function Setting Screen 508

A vehicle function setting screen 508 is a screen for using other functions of the vehicle 1. The other functions of the vehicle 1 include, for example, opening and closing an electric back door, adjusting a suspension, and the like.

### (9) Display Mode Setting Screen 509

A display mode setting screen 509 is a screen for setting the type of information to be displayed on the meter display 21. For example, in a case where a plurality of pieces of information other than the speed can be displayed on the meter display 21, the user of the vehicle 1 can customize the information to be displayed on the meter display 21 via the display mode setting screen 509.

The plurality of screens as exemplified above can be switched, for example, by performing a predetermined operation such as a left or right swipe on the touch panel provided on the outer display 23.

Further, the HMI controller 1011 can display on the outer display 23 a shortcut screen 510 for jumping to each screen. FIG. 6B is a diagram illustrating an example of the shortcut screen 510. The shortcut screen can be called, for example, by performing a predetermined operation (e.g., an operation of swiping upward from the bottom of the screen) on each screen including the main screen 501. On the shortcut screen 510, a plurality of interfaces (e.g., buttons) for transition to each screen are arranged, and by operating an interface, it is possible to move to a target screen.

In this way, the HMI controller 1011 consolidates and outputs at least information related to the control of the vehicle to the outer display 23.

The information related to the control of the vehicle is typically information related to the travel control of the vehicle. Examples of the information related to the travel control of the vehicle include information for controlling components belonging to the vehicle system, information for controlling components belonging to the drive system, etc. In addition, information for controlling components necessary for the vehicle to appropriately travel, such as lights and wipers, among the components belonging to the electrical system, can also be considered information related to the travel control of the vehicle.

Note that information that is not directly related to the travel control of the vehicle may also be output to the outer display 23 as long as the information is related to the control of the vehicle. For example, information for controlling an electric door of the vehicle may be output to the outer display 23.

The HMI controller 1011 can switch between a plurality of types of screens output to the inner display 22.

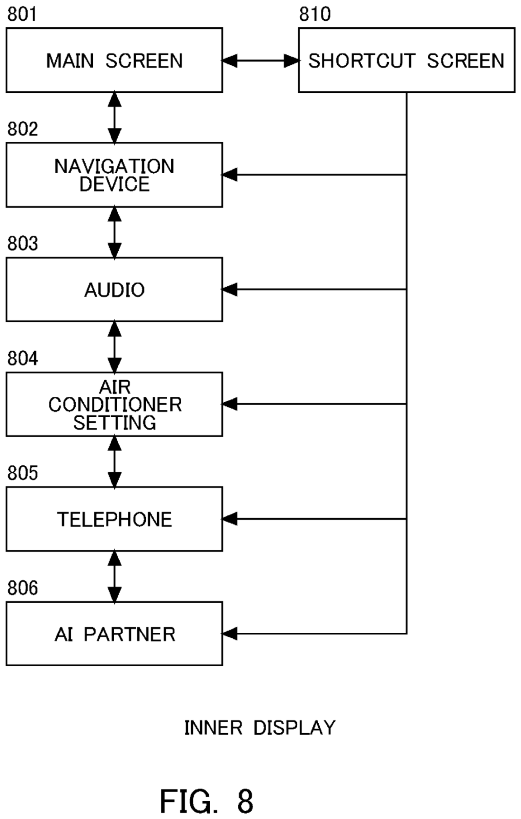

FIG. 8 is a diagram explaining transitions between the plurality of types of screens output to the inner display 22. As illustrated in the figure, the HMI controller 1011 can output the plurality of screens, centered around a main screen 801, to the inner display 22.

### (1) Main Screen 801

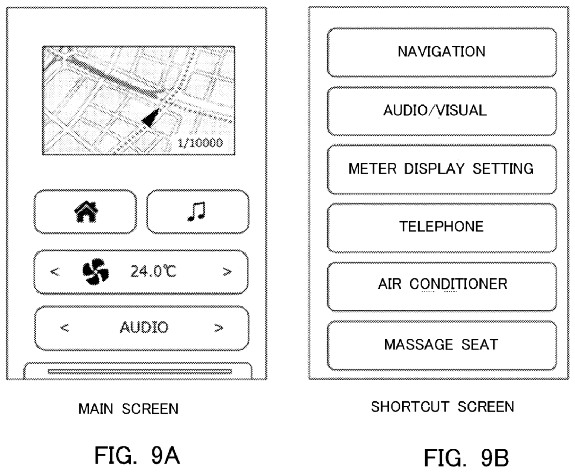

The main screen 801 is a screen that is normally displayed on the inner display during traveling. FIG. 9A is a diagram illustrating an example of the main screen 801. The display contents of the main screen can be customized by the user.

### (2) Navigation Screen 802

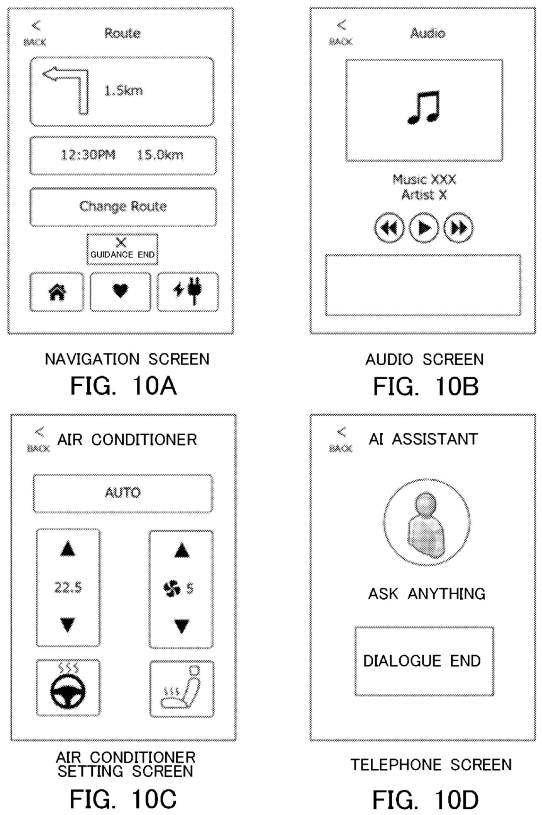

A navigation screen 802 is a screen that is related to car navigation. FIG. 10A is a diagram illustrating an example of the navigation screen 802. The information included in the navigation screen 802 is generated by the navigation unit 1015.

Note that in a case where map information in the car navigation is displayed on the center display 24, auxiliary information about the route of the vehicle 1 may be output on the navigation screen 802. As the auxiliary information about the route, for example, guidance of a point where a right or left turn or the like is performed next, an estimated time of arrival, a remaining distance, and so on can be exemplified.

In addition, the navigation screen 802 may include a part of the information and user interfaces displayed on the center display 24.

For example, frequently used user interfaces, such as a button to start route guidance to home, a button to call a bookmark, a button to start route guidance to a charging spot, etc., can be placed on the navigation screen 802.

### (3) Audio Screen 803

An audio screen 803 is a screen related to audio functions of the vehicle 1. FIG. 10B is a diagram illustrating an example of the audio screen 803. The information included in the audio screen 803 is generated by the entertainment controller 1014. The entertainment controller 1014 can obtain and play songs via a network or a medium. The audio screen 803 can include information about the song being played and an interface for selecting a song.

### (4) Air Conditioner Setting Screen 804

An air conditioner setting screen 804 is a screen for controlling the car air conditioner of the vehicle 1. FIG. 10C is a diagram illustrating an example of the air conditioner setting screen 804.

On the air conditioner setting screen 804, it is possible to set the temperature and air volume of the car air conditioner and air conditioning devices to be operated (a steering heater, a seat heater, a defroster, and the like). The vehicle controller 1012 generates a user command based on an operation performed on the screen, and transmits the user command to the body ECU 30 to control the air conditioning unit 31 and the like.

Note that the car air conditioner is equipment of the vehicle 1 controlled by commands from the outside, but since it is related to the comfort of the occupant, the air conditioner setting screen 804 is displayed on the inner display 22, not on the outer display 23.

### (5) Telephone Screen 805

A telephone screen 805 is a screen for wirelessly connecting to a user terminal to make hands-free calls. In a case where the wireless communication unit 13 has a module for wireless communication with a user terminal, a call from (or an incoming call to) the user terminal can be made via the module.

### (6) Al Partner Screen 806

An AI partner screen 806 is a screen for interacting with a virtual agent (AI partner) capable of natural language interaction. FIG. 10D is a diagram illustrating an example of the Al partner screen 806. The screen includes a virtual agent character, and the occupant of the vehicle can obtain information by interacting with the character. Natural language dialogue services are provided by the assistant unit 1016.

The Al partner screen 806 may include an interface for giving instructions to the agent. Note that in a case where there are a plurality of occupants in the vehicle, the assistant unit 1016 may be configured to be able to execute an optional agent corresponding to each person. The Al partner screen 806 may include an interface for starting and ending interaction with the agent, an interface for replacing the agent, and the like.

The plurality of screens as exemplified above can be switched, for example, by performing a predetermined operation such as a left or right swipe on the touch panel provided on the inner display 22.

Further, the HMI controller 1011 can display on the inner display 22 a shortcut screen 810 for jumping to each screen. FIG. 9B is a diagram illustrating an example of the shortcut screen 810. The shortcut screen can be called, for example, by performing a predetermined operation (e.g., an operation of swiping upward from the bottom of the screen) on each screen including the main screen 801. On the shortcut screen 810, a plurality of interfaces (e.g., buttons) for transition to each screen are arranged, and by operating an interface, it is possible to move to a target screen.

In this way, the HMI controller 1011 consolidates and outputs information related to the convenience and comfort of the occupants to the inner display 22.

Note that information about components that are part of the vehicle, such as the car air conditioner, but are related to the convenience or comfort of the occupants, may be output to the inner display 22 without being treated as information related to the control of the vehicle.

In this manner, in the case where the target information corresponds to both the information related to the control of the vehicle and the information related to the convenience (or comfort) of the occupants, the target information may be selectively output to either the inner display 22 or the outer display 23 in accordance with predetermined criteria.

In addition, apart from the above description, the HMI controller 1011 may output predetermined information to the center display 24. For example, the information generated by the entertainment controller 1014 and the navigation unit 1015 can be output not only to the inner display 22 but also to the center display 24.

### [Touch Operation Disabling Process]

Next, a process of disabling touch operations on the inner display 22 and the outer display 23 based on the holding state of the steering wheel 4 will be described.

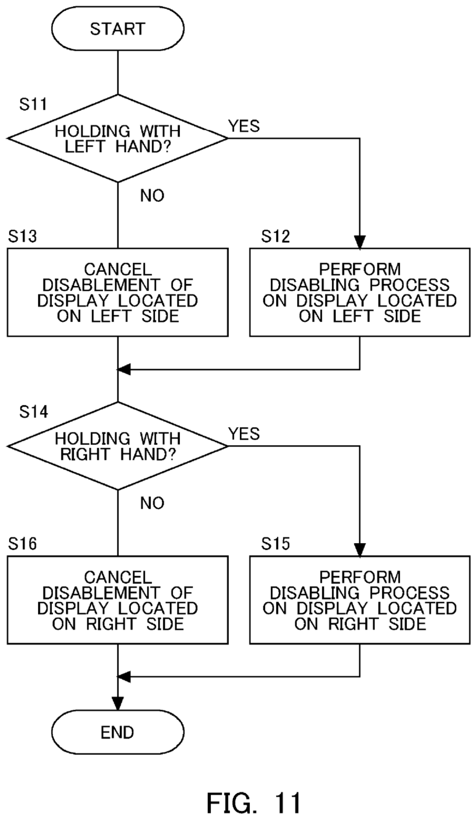

FIG. 11 is a flowchart of a touch operation disabling process executed by the HMI controller 1011. This process is periodically executed.

First, in step S11, the HMI controller 1011 determines, based on the output from the steering sensor 143, whether or not the driver is holding the steering wheel 4 with his or her left hand. For example, in a case where a contact sensor is installed in the area 4L in FIG. 2 as the steering sensor 143, the fact that the sensor detects contact means that the driver is holding the steering wheel 4 with his or her left hand.

If the determination is affirmative in step S11, the processing proceeds to step S12.

In step S12, the HMI controller 1011 performs a disabling process on the display located on the left side as seen from the driver. The display located on the left side as seen from the driver is the inner display 22 in the case of a right-hand drive vehicle, and is the outer display 23 in the case of a left-hand drive vehicle.

The disabling process executed here may disable touch operations for the entire surface (all areas) on the screen.

If the determination is negative in step S11, the processing proceeds to step S13.

In step S13, if the disabling process is performed on the display located on the left side as seen from the driver, the HMI controller 1011 cancels this disabling process. Note that if the display is not subjected to the disabling process, the processing proceeds to step S14.

In step S14, the HMI controller 1011 determines, based on the output from the steering sensor 143, whether or not the driver is holding the steering wheel 4 with his or her right hand. For example, in a case where a contact sensor is installed in the area 4R in FIG. 2 as the steering sensor 143, the fact that the sensor detects contact means that the driver is holding the steering wheel 4 with his or her right hand.

If the determination is affirmative in step S14, the processing proceeds to step S15.

In step S15, the HMI controller 1011 performs the disabling process on the display located on the right side as seen from the driver. The display located on the right side as seen from the driver is the outer display 23 in the case of a right-hand drive vehicle, and is the inner display 22 in the case of a left-hand drive vehicle.

The disabling process executed here may disable touch operations for all the areas on the screen.

If the determination is negative in step S14, the processing proceeds to step S16.

In step S16, if the disabling process is performed on the display located on the right side as seen from the driver, the HMI controller 1011 cancels this disabling process. Note that, in a case where the disabling process is not performed on that display, the processing ends.

As described above, in the first embodiment, the HMI controller 1011 included in the vehicle ECU 10 uses the outer display 23 and the inner display 22 to output various types of information related to the vehicle and its traveling.

In particular, the HMI controller 1011 outputs information (second information) related to the convenience and comfort of the occupants via the inner display disposed closer to the inner side of the vehicle, and outputs information (first information) related to the control of the vehicle via the outer display disposed closer to the outer side of the vehicle. According to such a configuration, the driver of the vehicle 1 will be able to intuitively recognize in which direction the information he or she is seeking is output on the display unit, thereby minimizing the time during which the driver's attention is directed to the display.

Further, the HMI controller 1011 restricts touch operations on the inner display 22 or the outer display 23 on the basis of the state of the driver's hands holding the steering wheel. According to such a configuration, it is possible to suppress erroneous operations on the displays located in the vicinity of driver's hands.

### (Second Embodiment)

In the first embodiment, touch operations on the inner display 22 and the outer display 23 are disabled based on the state of holding the steering wheel 4 with driver's hands. However, even when the driver is holding the steering wheel, there are cases where touch operations may be permitted in situations where safety is not affected. A second embodiment is an embodiment in which the disabling process described in the first embodiment is not performed under specific conditions.

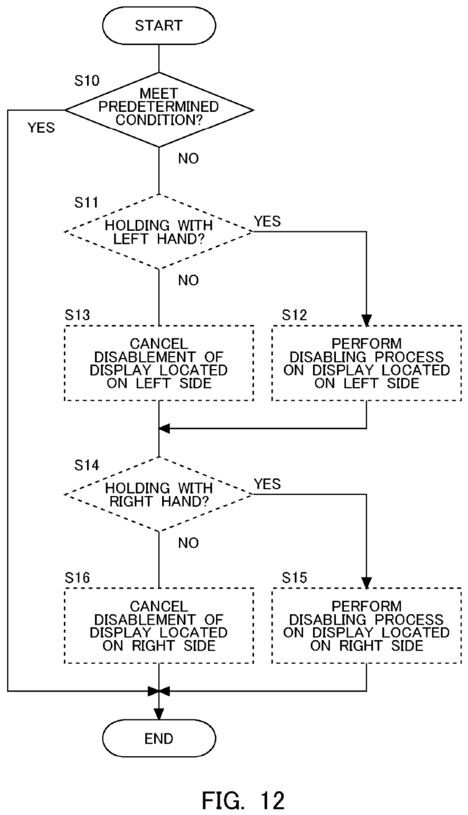

FIG. 12 is a flowchart of a touch operation disabling process to be executed in the present embodiment.

In the present embodiment, first, in step S10, the HMI controller 1011 determines whether or not the status of the vehicle 1 meets a predetermined condition. The predetermined condition may be, for example, a condition considered to have a high safety margin, such as "the vehicle speed is equal to or less than a predetermined value", "the vehicle is stopped", "the steering angle of the steering wheel is equal to or less than a predetermined value", or the like. In addition, the status of the vehicle 1 can be obtained from a sensor included in the sensor group 14.

In this step, if the status of the vehicle 1 meets the predetermined condition, the above-described disabling process is skipped. On the other hand, if the status of the vehicle 1 does not meet the predetermined condition, the same processing as that shown in FIG. 11 is performed.

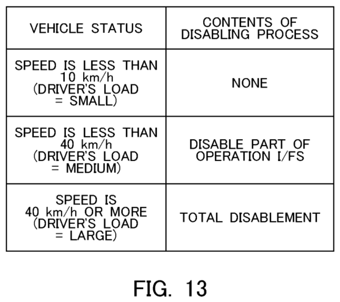

Here, note that in this example, when the status of the vehicle 1 meets the predetermined condition, the process of disabling touch operations itself is skipped, but a plurality of levels may be provided for the process of disabling touch operations, and the level to be applied may be dynamically determined according to the status of the vehicle 1. For example, as shown in FIG. 13, the status of the vehicle 1 may be divided into a plurality of stages according to the load level of the driver, and the greater the load on the driver, the more elements are disabled. Note that FIG. 13 is an example, and the load on the driver may be defined by such things as "whether or not the vehicle is turning right or left", "whether or not the vehicle is changing the course", "the amount of surrounding traffic", or the like. Also, the status of the vehicle may be defined by something other than the load on the driver. In addition, the level of disablement may be, for example, "disable touch operations on either (or both) of the inner display and the outer display" or "classify a plurality of operation interfaces currently displayed on the display according to the degree of importance and disable the operation interfaces in descending order of the degree of importance".

### (Third Embodiment)

In the first and second embodiments, when a driver's hand is released from the steering wheel, touch operations on the display on the corresponding side is enabled.

However, when both hands are released from the steering wheel, safety may be impaired. In a third embodiment, to address this issue, when both hands are released, the disabling process is performed on both the left and right displays.

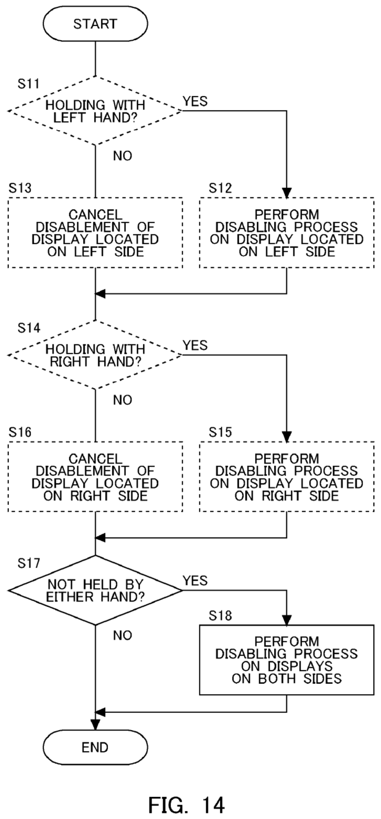

FIG. 14 is a flowchart of a touch operation disabling process to be executed in the present embodiment.

In the present embodiment, step S17 is executed following the processing of FIG. 11.

In step S17, the HMI controller 1011 determines, based on the output from the steering sensor 143, that neither the left hand nor the right hand of the driver is touching the steering wheel 4.

If the determination in this step is affirmative, the processing proceeds to step S18, where the HMI controller 1011 performs the disabling process on both the inner display 22 and the outer display 23. In the case of a negative determination in this step, the processing ends.

According to the third embodiment, when the driver is not holding the steering wheel, the disabling process is performed on both the left and right displays, thus encouraging the driver to hold the steering wheel, which contributes to safety.

### (Modifications)

The above-described embodiments are merely examples, but the present disclosure can be implemented with appropriate modifications without departing from the spirit thereof.

For example, the processing and/or means (devices, units, etc.) described in the present disclosure can be freely combined and implemented as long as no technical contradiction occurs.

In addition, in each of the embodiments, an example is given in which touch operations on a touch panel is totally disabled, but in a case where a plurality of operation interfaces are displayed on a target display, only a part of the operation interfaces may be disabled. For example, operation interfaces for performing control important for the traveling of the vehicle may not be disabled.

Moreover, in each of the embodiments, both the inner display 22 and the outer display 23 are targets to be disabled, but only the outer display 23 may be targeted for disabling. This is due to the fact that the inner display 22 may be operated by an occupant other than the driver.

Further, the HMI controller 1011 may perform the disabling process based on the rotational torque applied to the steering wheel in addition to the holding state of the steering wheel. For example, when the rotational torque applied to the steering wheel is equal to or greater than a predetermined value, it may be determined that steering operation is being performed, and the disabling process may be performed separately from the processing shown in FIG. 11. Accordingly, it is possible to prohibit touch operations in an unstable situation such as during a right or left turn, during a lane change, or the like.

However, even during steering operation, it may be better to immediately respond to an operation request of the driver for safety-related components such as windshield wipers and headlights. Therefore, when the disabling process based on the steering operation is performed, the conditions for disablement may be relaxed as compared with the disabling process due to the holding state of the steering wheel. For example, it is also possible to relax the conditions such as "the disabling process is performed on only one of the inner display 22 and the outer display 23" and "the disabling process is performed on operation interfaces having a degree of importance equal to or less than a predetermined value among the currently displayed operation interfaces".

In addition, in each of the embodiments, the "disabling process" of disabling touch operations is exemplified, but in a case where the purpose is to prevent erroneous operations, a process of lowering the sensitivity of touch operations on the touch panel may be performed instead of the disabling process.

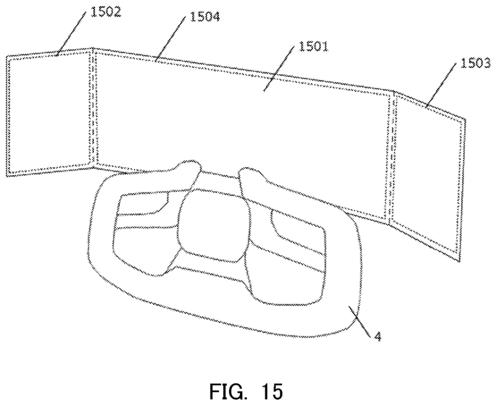

Moreover, in each of the embodiments, the form is exemplified in which the meter display 21, the inner display 22, and the outer display 23 are respectively independent of one another, but the respective displays do not necessarily have to be physically independent of one another. The display devices according to the present disclosure may be implemented by, for example, a single display device 1501, as illustrated in FIG. 15. In the example of FIG. 15, the display device 1501 has three display areas (display units) separated by broken lines. The display device 1501 may have a structure in which a display surface is bent or curved at its portions indicated by dashed lines. In the illustrated example, a display area 1502 functions as the inner display 22, and a display area 1503 functions as the outer display 23. Also, a display area 1504 functions as a meter display 21.

Further, in the embodiments, two types of information, i.e., the information related to the convenience of the occupants and the information related to the comfort of the occupants, are exemplified as the second information, but the second information may be either one of these, or may include other information.

Also, in the embodiments, the information related to the control of the vehicle is exemplified as the first information, but the first information may include other information.

In addition, the processing described as being performed by one device or unit may be shared and performed by a plurality of devices or units. Alternatively, the processing described as being performed by different devices or units may be performed by a single device or unit. In a computer system, it is possible to flexibly change the hardware configuration (server configuration) that can achieve each function of the computer system.

The present disclosure can also be realized by supplying to a computer a computer program in which the functions described in the above-described embodiments are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

## Claims

1. An in-vehicle system comprising a display device (21, 22, 23), and an information processing apparatus (10) configured to output information via the display device (21, 22, 23),
the display device (21, 22, 23) comprising a pair of display units (22, 23) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25),
the information processing apparatus (10) including a controller (101) configured to execute:
obtaining touch operations performed on each of the pair of display units (22, 23);
obtaining (S11, S14) sensor data indicating a state of holding the steering wheel (4) by a driver; and
performing (S12, S15), based on the sensor data, a disabling process to at least partially disable the touch operations on at least one of the pair of display units (22, 23).

2. The in-vehicle system according to claim 1, wherein the sensor data is data indicating an area of the steering wheel (4) with which a hand is in contact.

3. The in-vehicle system according to claim 1, wherein
when the sensor data indicates that the steering wheel (4) is held by a left hand, the controller (101) performs the disabling process on the display unit (22) located on the left side of the driver among the pair of display units (22, 23); and
when the sensor data indicates that the steering wheel (4) is held by a right hand, the controller (101) performs the disabling process on the display unit (23) located on the right side of the driver among the pair of display units (22, 23).

4. The in-vehicle system according to claim 3, wherein when the sensor data indicates that the steering wheel (4) is not held by either of the hands, the controller (101) performs the disabling process on both of the pair of display units (22, 23).

5. The in-vehicle system according to claim 3, wherein the controller (101) does not perform the disabling process on either of the pair of display units (22, 23) when a traveling state of a vehicle (1) meets a predetermined condition.

6. The in-vehicle system according to claim 5, wherein the predetermined condition includes that a speed of the vehicle (1) is equal to or less than a predetermined value.

7. The in-vehicle system according to claim 1, wherein when the sensor data indicates that the steering wheel (4) is held by a hand located on an outer side of the vehicle (1), the controller (101) performs the disabling process on the display unit located on the outer side of the vehicle (1) among the pair of display units (22, 23).

8. The in-vehicle system according to claim 1, wherein the controller (101) obtains a rotational torque applied to the steering wheel (4), and performs the disabling process when the rotational torque is equal to or greater than a predetermined value.

9. The in-vehicle system according to claim 8, wherein the disabling process based on the rotational torque is a process of disabling touch operations on either one of the pair of display units (22, 23) or a process of disabling a part of a plurality of output operation interfaces.

10. The in-vehicle system according to claim 1, wherein the disabling process is either of a process of totally disabling touch operations on a target display unit (22, 23) and a process of disabling a part of a plurality of operation interfaces output to the target display unit (22, 23).

11. A vehicle (1) on which the in-vehicle system according to any one of claims 1 through 10 is mounted.

12. An information processing apparatus (10) configured to provide information via a display device (21, 22, 23) including a pair of display units (22, 23) that are provided in a forward portion of a driver's seat (2) in a passenger compartment, are disposed at positions on both sides of a steering wheel (4) while protruding rearward of an instrument unit (21) disposed in front of the steering wheel (4), and have touch panels (25),
the information processing apparatus (10) comprising a controller (101) configured to execute:
obtaining touch operations performed on each of the pair of display units (22, 23);
obtaining (S11, S14) sensor data indicating a state of holding the steering wheel (4) by a driver; and
performing (S12, S15), based on the sensor data, a disabling process to at least partially disable the touch operations on at least one of the pair of display units (22, 23).

13. The information processing apparatus (10) according to claim 12, wherein the sensor data is data indicating an area of the steering wheel (4) with which a hand is in contact.

14. The information processing apparatus (10) according to claim 12, wherein
when the sensor data indicates that the steering wheel (4) is held by a left hand, the controller (101) performs the disabling process on the display unit (22) located on the left side of the driver among the pair of display units (22, 23); and
when the sensor data indicates that the steering wheel (4) is held by a right hand, the controller (101) performs the disabling process on the display unit (23) located on the right side of the driver among the pair of display units (22, 23).

15. The information processing apparatus (10) according to claim 14, wherein when the sensor data indicates that the steering wheel (4) is not held by either of the hands, the controller (101) performs the disabling process on both of the pair of display units (22, 23).
